# NEUE EUROPÄISCHE PATENTSCHRIFT

(11) **EP 1 167 141 B2**
(45) Veröffentlichungstag und Bekanntmachung des Hinweises auf die Entscheidung über den Einspruch: **25.07.2018**
(45) Hinweis auf die Patenterteilung: 07.06.2006
(21) Anmeldenummer: 01106483.9
(22) Anmeldetag: 26.03.2001
(51) Int. Cl.: B60T 8/1755, B60T 8/17

(54) **Stabilisierung von Gliederzügen**
Stabilization of articulated trains
Stabilisation des trains articulés

(30) Priorität: 20.06.2000 DE 10030128
(43) Veröffentlichungstag der Anmeldung: 02.01.2002
(73) Patentinhaber: KNORR-BREMSE Systeme für Nutzfahrzeuge GmbH, 80809 München (DE)
(72) Erfinder: Hecker, Falk, 71706 Markgrönigen (DE); Beyer, Claus, 71640 Ludwigsburg (DE); Schramm, Herbert, 71229 Leonberg (DE)
(74) Vertreter: Schweiger, Martin

(56) Entgegenhaltungen:
- EP-A- 0 482 374
- EP-A1- 0 482 374
- WO-A1-00/03900
- WO-A1-01/02227
- DE-A- 19 964 048
- DE-A1- 3 407 660
- DE-A1- 19 632 943
- DE-A1- 19 743 383
- DE-A1- 19 751 891
- DE-A1- 19 755 431
- DE-A1- 19 802 041
- DE-A1- 19 808 673
- DE-A1- 19 810 642
- DE-A1- 19 827 882
- DE-A1- 19 843 826
- DE-A1- 19 859 953
- DE-A1- 19 907 633
- DE-C- 19 602 879
- DE-C1- 19 602 879
- DE-C1- 19 809 546
- DE-C1- 19 825 204
- GB-A- 2 257 403
- GB-A- 2 257 403
- WILLMS J.: 'Bremsverhalten dreigliedriger Lastzüge mit verschiedenen Bremssystemen', Juli 1996, UNIVERSITÄT HANNOVER
- "ESP elektronisches Stabilitätsprogramm" XV Smposium 20.21 Oktober 1995, Bad Neuenahr
- VAN ZANTEN V A. ET AL: 'FDR - Die Fahrdynamikregelung von Bosch' ATZ AUTOMOBILTECHNISCHE ZEITSCHRIFT Bd. 96, Nr. 11, 1994, Seiten 674 - 689
- MÜLLER A. ET AL: 'Das neue Fahrsicherheitssystem Electronic Stability Program von Mercedes-Benz' ATZ AUTOMOBILTECHNISCHE ZEITSCHRIFT Bd. 96, Nr. 11, 1994, Seiten 656 - 689

## Beschreibung

Die Erfindung betrifft ein Steuermodul zur Verhinderung von Fahrzeuginstabilitäten mehrgliedriger Lastkraftzüge gemäß dem unabhängigen Anspruch 1 sowie ein Fahrzeugverbund gemäß Anspruch 8.

Verfahren und Steuermodule zur Verhinderung von Fahrzeuginstabilitäten sind beispielsweise als sogenannte elektronische Stabilitätsprogramme ("Electronic Stability Programme" = ESP) im Personenwagenbereich wie auch im Nutzfahrzeugbau bekannt. Kern dieser bekannten elektronischen Fahrdynamikregelungen ist die gezielte Abbremsung einzelner Räder, sobald ein kritischer Fahrzustand erkannt wurde. So wird beim übersteuernden Ausbrechen des Fahrzeugs gezielt das kurvenäußere Vorderrad und beim untersteuernden Ausbrechen das kurveninnere Hinterrad gebremst. Auf diese Weise kann ein Giermoment aufgebaut werden, das einem bestehenden unerwünschten Giermoment aufgrund der Schleuderbewegung entgegenwirkt, wodurch das Fahrzeug weitgehend auf einem vom Fahrer gewünschten Sollkurs gehalten wird. Gegebenenfalls wird zusätzlich über einen gesteuerten Eingriff in das Motormanagement das Antriebsmoment an den Antriebsrädern reduziert oder gänzlich zurückgenommen, um auf diese Weise jede Einleitung von Längskräften an den Reifenaufstandsflächen zur Fahrbahn zu unterbinden.

Zur Erfassung der ungewollten Schleuderbewegungen bzw. dynamischen Fahrzeuginstabilitäten werden neben den bereits vorhandenen Raddrehzahlsensoren einer ABS(Antiblockier-System)-Sensorik typischerweise die Signale eines Lenkwinkelsensors, eines Gierbeschleunigungssensors sowie wenigstens eines Querbeschleunigungssensors ausgewertet. Durch Auswertung der Ausgangssignale dieser Sensoren in einer nachgeschalteten elektronischen Rechen- und Auswerteeinheit kann eine zuverlässige Bestimmung der Abweichung der Fahrzeugbewegungen vom gewünschten Sollkurs erfolgen. Durch Auswertung der Signale der Raddrehzahlsensoren kann weiterhin, wie bei bekannten Antiblockiersystemen (= ABS) das Blockieren einzelner Räder in jeder Fahrsituation verhindert werden, was insbesondere auch im Zusammenhang mit einem elektronischen Stabilitätsprogramm (= ESP) zur Verhinderung von Seitenkraftverlusten an einzelnen Rädern aufgrund eines blockierten Rades wichtig ist. Der Lenkwinkelsensor ermöglicht eine Erfassung des aktuellen Kurswunsches des Fahrers und im Zusammenhang mit den Ausgangssignalen des Gierbeschleunigungssensors (Drehbeschleunigung um die Hochachse des Fahrzeugs) sowie des wenigstens einen Querbeschleunigungssensors eine zuverlässige Beurteilung, ob der Fahrerwunsch noch mit dem Fahrzeugkurs übereinstimmt bzw. ob das Fahrzeug über- oder untersteuert oder gar bereits unkontrolliert schleudert.

Derartige Systeme sind gleichermaßen im Personenkraftwagenwie auch im Nutzfahrzeugbereich bekannt. Bei Einzelfahrzeugen, d.h. solchen ohne Anhänger, können mit den genannten Komponenten grundsätzlich die gleichen Stabilisierungsmaßnahmen zur Verhinderung von dynamischen Instabilitäten eingeleitet werden.

Bei Sattelzügen bzw. bei Sattelkraftwagen treten in zahlreichen Fahrsituationen trotzdem Instabilitäten auf.

Aufgabe der Erfindung ist es, ein Steuermodul zur Verhinderung von Fahrzeuginstabilitäten zur Verfügung zu stellen, das auch bei mehrgliedrigen LKW-Zügen wirksam ein Schleudern und/oder Umkippen des Zuges verhindern kann.

Diese Aufgabe wird erfindungsgemäß mit den Merkmalen des unabhängigen Anspruchs gelöst.

Weitere vorteilhafte Ausbildungen der Erfindung sind in den abhängigen Ansprüchen enthalten.

Die Erfindung geht davon aus, daß eine erweiterte Sensorik und Stabilisierungsregelung erforderlich ist, da hier zusätzliche Formen der Fahrzeuginstabilität - Einknicken im Aufliegergelenk und Kippen des gesamten Zuges - auftreten können. Um bei relativ niedrigen Reibwerten zwischen Reifen und Fahrbahn - bspw. bei Nässe - die Fahrzeugkombination zu stabilisieren, wird zusätzlich zu den oben beschriebenen Regeleingriffen (Reduzierung des Motormoments, Abbremsung einzelner Räder des Zugfahrzeugs) der gesamte Auflieger gebremst. Dies streckt den Zug und kann ihn auf diese Weise zusätzlich stabilisieren. Bei mittleren und höheren Reibwerten neigt ein Nutzfahrzeug aufgrund seines relativ hohen Schwerpunkts eher zum Kippen als zum Schleudern, weshalb in diesem Fall die sog. Roll-Over-Prevention(ROP)-Funktion eingreift. Dabei wird die Geschwindigkeit des Fahrzeugs bei drohendem Umkippen durch Motor- und Bremseingriffe soweit verringert, dass die Kippgefahr deutlich reduziert wird.

Die bei Sattelzügen verwendeten Strategien zur Vermeidung von dynamischen Fahrzeuginstabilitäten lassen sich nicht ohne weiteres auf einen Fahrzeugverbund, bestehend aus Zugfahrzeug und Deichselanhänger, übertragen. Hier könnte die Abbremsung des gesamten Anhängers ein Einknicken des Zuges im Deichselgelenk provozieren.

Ein Vorteil der Erfindung besteht insbesondere darin, dass ein Steuermodul zur Verhinderung von Fahrzeuginstabilitäten mit entsprechenden Änderungen gleichermaßen in mehrgliedrigen Lastkraftzügen, aus einem Zugfahrzeug und einem Deichselanhänger, zur Anwendung kommen kann. Mit dem erfindungsgemäßen System ist die Gefahr des Einknickens im Deichselgelenk signifikant reduziert, da insbesondere beim übersteuernden Ausbrechen des Zugfahrzeuges sowie bei der Gefahr des Kippens des gesamten Zuges der Deichselanhänger weitgehend nur an seiner Hinterachse abgebremst wird, so dass der gesamte Zug gestreckt wird und nicht zum Einknicken neigt.

In der Erfindung ist je nach von einer Sensorik erkannten Instabilitätssituation eine Verschiebung der Bremskraft im Anhänger hin zu dessen hinteren Achse vorgesehen, so dass der Seitenkraftverlust aufgrund von Bremskräften an seiner vorderen Deichselachse minimiert wird. Ein solches System erfordert minimale Modifikationen eines herkömmlichen ESP-Systems, wobei die Regeleingriffe zur Verhinderung von Fahrzeuginstabilitäten und insbesondere zur Verhinderung eines Kippens des Zuges dem eines bekannten ESP-Systems für Sattelzüge ähneln. Es ist lediglich erforderlich, die Schnittstelle zur gewünschten Anhängerbremssteuerung zu definieren. Somit lässt sich ein solches System sehr kostengünstig realisieren.

In der Erfindung ist ein zusätzlicher Sensor an der Anhängevorrichtung im Zugfahrzeug vorgesehen, der an eine nachgeschaltete Auswerte- und Steuereinheit Informationen über den aktuellen Deichselwinkel liefert. Auf diese Weise kann jederzeit eine Einknikkung des Anhängers im Deichselgelenk erkannt und entsprechende Gegenmaßnahmen eingeleitet werden. Eine bevorzugte Gegenmaßnahme in einem solchen Fall ist ein verstärktes Bremsen der Anhängerhinterachse, um den Anhänger zu strecken. Auch für ein solches System sind kaum Modifikationen an bekannten ESP-Strukturen notwendig. Wenn für die Sensierung des Deichselwinkels ein Deichselwinkelsensor im Zugwagen und ein Deichseldrehratensensor im Anhänger verwendet wird, ist eine leichte Modifikation des Anhängers aufgrund dieser zusätzlichen Sensorik unumgänglich, was jedoch die Gesamtkosten des Systems nicht wesentlich erhöht.

Bei einer bevorzugten Ausführungsform der Erfindung sind im Anhänger zusätzliche Sensoren vorgesehen, die neben einer Erfassung des Deichselwinkels auch die Erfassung einer Hängerdrehrate sowie einer Querbeschleunigung des Anhängers ermöglichen. Zur Erfassung der Hängerdrehrate kommt dabei zweckmäßigerweise ein Gierbeschleunigungssensor, zur Erfassung einer Hängerquerbeschleunigung ein oder mehrere Querbeschleunigungssensoren zur Anwendung. Die Ausgangssignale dieser Sensoren können entweder über eine geeignete Schnittstelle an die zentrale Rechen- und Steuereinheit im Zugfahrzeug geleitet werden, von der aus die geeigneten Bremseingriffe zur Verhinderung von Instabilitäten des Fahrzeugverbundes gesteuert werden. Ebenso möglich ist es jedoch, im Anhänger eine separate Auswerteeinheit vorzusehen, die mit der Rechen- und Steuereinheit des Zugfahrzeuges gekoppelt ist und diese von zusätzlicher Rechenarbeit entlasten kann.

Mit einer solchen zusätzlichen Sensorik im Anhänger kann die Vermeidung der Kippgefahren aufgrund der feinfühligeren Erfassbarkeit von beginnenden Fahrzeuginstabilitäten weiter verbessert werden; auch die Einknickgefahren im Deichselgelenk des Anhängers können sehr zuverlässig verhindert werden.

Besonders vorteilhaft ist bei einer zusätzlichen Rechen- und Steuereinheit im Anhänger dessen autarke Einsetzbarkeit, ohne dass ein entsprechendes System im Zugfahrzeug vorhanden sein muss. Allerdings sind bei einem derartigen System weitergehende Modifikationen gegenüber bekannten Systemen unumgänglich.

Bei einer bevorzugten Ausführungsform der Erfindung ist ein vollständiges und eigenständiges System zur Verhinderung von Fahrzeuginstabilitäten im Anhänger vorgesehen, das je nach Ausführungsform sogar in der Lage sein kann, stabilisierende Bremseingriffe im Zugfahrzeug zu steuern und auszulösen. Neben der bereits oben beschriebenen Sensorik zur Erfassung von Schleuderbewegungen im Anhänger wie Deichselwinkel- und/oder -drehratensensor, Gierbeschleunigungs- und Querbeschleunigungssensor sowie nachgeschalteter Rechen- und Steuereinheit ist eine geeignete Schnittstelle zur zentralen Rechen- und Steuereinheit des Zugfahrzeuges notwendig. Mit einem solchen System können dann sogar übersteuernde Schleuderbewegungen des Zugfahrzeuges erkannt und geeignete Bremseingriffe initiiert werden. Ein Zugwagen kann darüber hinaus auch dann stabilisiert werden, wenn er über kein eigenes ESP-System verfügt. Ein solches System kann nicht nur bei einem Fahrzeugverbund mit Deichselanhänger eingesetzt werden, sondern ist ebenso für Sattelzüge geeignet.

Die Erfindung betrifft Konzepte für Stabilisierungsfunktionen (DSP = "Stabilisiserung der Fahrzeugkombination Zugfahrzeug/Anhänger bei niedrigem Straßenreibwert" und ROP = "Roll-Over-Protection") im Rahmen der ESP-Entwicklung für Gliederzüge. Dabei geht die Erfindung von dem Grundgedanken aus, daß sich die für Sattelzüge vorhandene ESP-Funktion (ESP = "Elektronisches Stabilitätsprogramm") läßt aufgrund des zusätzlichen Freiheitsgrades beim Deichselanhänger nicht ohne weiteres auf die Fahrzeugkombination Zugfahrzeug/Anhänger übertragen läßt, da hier die Fahrsituation durch Einbremsen des gesamten Anhängers noch verschlechtert werden kann.

Beim Pkw-ESP wird das Fahrzeug in kritischen Situationen wie beispielsweise bei beginnendem Schleudern durch automatische Brems- und Motoreingriffe stabilisiert. Hierzu werden neben der ABS-Sensorik wie zum Beispiel Drehzahlfühler an jedem Rad des Fahrzeugs noch Sensoren für den Lenkradwinkel also für den Fahrerwunsch sowie für die Gierrate und die Querbeschleunigung des Fahrzeugs, also für die Ist-Bewegung, verwendet. Bei beginnender Instabilität des Fahrzeugs stimmt die gemessene Fahrzeugbewegung nicht mehr mit der durch den Fahrer am Lenkrad vorgegebenen gewünschten Fahrzeugbewegung überein. In dieser Situation stabilisiert ESP mittels radselektiver Bremseingriffe und mittels Motoreingriffe das Fahrzeug, so daß die Bewegung - innerhalb der physikalischen Möglichkeiten - dem Fahrerwunsch entspricht. So wird z.B. beim Übersteuern hauptsächlich das kurvenäußere Vorderrad und beim Untersteuern das kurveninnere Hinterrad gebremst.

Das ESP für Sattelzüge oder Sattelkraftfahrzeuge stellt eine Weiterentwicklung des Pkw-ESP dar, um die zwei zusätzlichen Freiheitsgrade Einknicken und Umkippen abzudecken. Dabei wird zur Stabilisierung der Fahrzeugkombination auf niedrigem Reibwert bzw. bei der DSP-Funktion beispielsweise beim Übersteuern zusätzlich zum kurvenäußeren Vorderrad der gesamte Auflieger gebremst. Dies ist durch das Anhängersteuermodul auch bei konventionellen Aufliegern möglich, auch wenn diese nur mit ABS ausgerüstet sind. Auf mittlerem und hohem Reibwert neigt ein Nutzfahrzeug eher zum Kippen als zum Schleudern, weshalb in diesem Fall die sogenannte ROP-Funktion greift. Dabei wird die Geschwindigkeit des Fahrzeugs bei drohendem Umkippen durch Motor- und Bremseingriffe soweit verringert, daß die Kippgefahr deutlich reduziert wird.

Gemäß einer der Erfindung zugrundeliegenden Erkenntnis wird bei der bekannten ESP-Funktion der gesamte Auflieger in bestimmten Fahrsituationen eingebremst, was zum Strecken des Zuges und damit zum Vermeiden des Einknickens führt. Bei einem Deichselanhänger führt dieselbe Strategie, also das Bremsen des gesamten Anhängers durch die Bremskraft an den Deichselrädern zu einer Reduktion der Seitenführungskraft an diesen Rädern und damit zur weiteren Instabilität führen. Durch einen ESP-Eingriffmit dieser Strategie würde die Situation also sogar verschlechtert. Auch durch das ABS im Anhänger wird dieser Umstand nicht grundlegend geändert, denn der Aufbau von Längskräften an einem Rad führt grundsätzlich zur Reduktion von Seitenkräften.

Um diese Problematik zu umgehen, stellt die Erfindung mehrere Konzepte/Ausführungsbeispiele vor. Allen gemeinsam ist, den Seitenkraftverlust an den Deichselrädern - der ursächlich für das Einknicken ist - weitgehend zu vermeiden und gleichzeitig durch Bremsen des Hängers eine Stabilisierungswirkung zu erzielen.

Dabei wird die Bremskraft im Anhänger im Bedarfsfall zur hinteren Achse hin verschoben, und zwar gesteuert vom Zugfahrzeug aus. Damit sind die Bremskraft und der Seitenkraftverlust an der Vorderachse des Anhängers relativ gering. Durch das stärkere Bremsen der Hinterachse wird der Anhänger vorteilhafterweise gestreckt.

Die ESP-Unterfunktion wird in der folgenden Tabelle veranschaut:

| Situation | ESP-Aktion | Anmerkung |
|---|---|---|
| Untersteuern Lkw | kurveninneres Hinterrad Lkw einbremsen | wie bei bisheriger ESP-Funktion: kein influß auf die Hänerbewegung |
| Übersteuern Lkw | kurvenäußeres Vorderrad Lkw und Hinterachse Hänger einbremsen (Strecken des Anhängers) | Einknickgefahr des Anhängers provoziert durch ESP-Eingriff wird deutlich reduziert |
| Einknicken Deichselanhänger | kein Eingriff | kann nicht erkannt werden |
| Kippgefahr (ROP-Step I) | Bremsen des gesamten Zuges, dabei den Anhänger hinten stärker bremsen | Einknickgefahr des Anhängers provoziert durch ESP-Eingriff wird reduziert |
| Radabheben (ROP Step II) | Bremsen des gesamten Zuges, dabei den Anhänger hinten stärker bremsen | Einknickgefahr des Anhängers provoziert durch ESP-Eingriff wird reduziert |

Vorteilhafterweise sind bei dieser Ausgestaltung der Erfindung keine Änderungen an der bekannten ESP-Struktur und nur wenige Änderungen an der aktuellen ESP-Funktion nötig. Die ROP-Funktion ist vergleichbar mit derjenigen für Sattelzüge. Die Einknickgefahr für den Deichselanhänger, die durch ESP-Eingriff provozierbar ist, wird verringert. Weiterhin sind nur geringe Änderungen an Anhänger-EBS Systemen nötig.

Jedoch kann ein Einknicken des Deichselanhängers nicht erkannt werden. Außerdem muß eine Kombination mit einem modifizierten Anhänger-EBS bereitgestellt werden.

Das erfindungsgemäße Konzept sieht achsindividuelle Bremseingriffe am Anhänger mit einem zusätzlichem Sensor am Zugfahrzeug dar, der den Deichselwinkel messen kann, und einen zusätzlichen Sensor am Anhänger, der die Deichseldrehrate messen kann. Also liefert ein zusätzlicher Sensor Informationen über die Orientierung der Deichsel relativ zum Motorwagen. Damit kann die Einknickgefahr erkannt und dann entsprechende Gegenmaßnahmen wie beispielsweise ein stärkeres Bremsen der Anhängerhinterachse eingeleitet werden.

Die ESP-Unterfunktion wird in der folgenden Tabelle veranschaut:

| Situation | ESP-Aktion | Anmerkung |
|---|---|---|
| Untersteuern Lkw | kurveninneres Hinterrad Lkw einbremsen | wie bei bisheriger ESP-Funktion: kein Einfluß auf die Hängerbewegung |
| Übersteuern Lkw | kurvenäußeres Vorderrad Lkw und Hinterachse Hänger einbremsen (Strecken des Anhängers) | Einknickgefahr des Anhängers, provoziert durch ESP-Eingriff, wird deutlich reduziert |
| Einknicken Deichselanhänger | Hinterachse Hänger einbremsen (Strecken des Anhängers) | Einknickgefahr des Anhängers wird deutlich verringert |
| Kippgefahr (ROP-Step I) | Bremsen des gesamten Zuges, dabei den Anhänger hinten stärker bremsen | Einknickgefahr des Anhängers, provoziert durch ESP-Eingriff, wird reduziert |
| Radabheben (ROP Step II) | Bremsen des gesamten Zuges, dabei den Anhänger hinten stärker bremsen | Einknickgefahr des Anhängers, provoziert durch ESP-Eingriff, wird reduziert |

Bei dieser Ausgestaltung sind kaum Änderungen an der bekannten ESP-Struktur und an der bekannten ESP-Funktion nötig. Das ROP vergleichbar mit demjenigen für Sattelzüge. Die Einknickgefahr des Deichselanhängers wird erkannt und verringert.

Gemäß einem weiteren erfindungsgemäßen Konzept erfolgen zumindest achsindividuelle Bremseingriffe am Anhänger mit zusätzlicher Sensorik, wobei die Hängerdrehrate und/oder Hängerquerbeschleunigung gemessen werden.

Hierbei wird entweder ein komplettes ESP im Deichselanhänger realisiert, oder die entsprechenden Signale werden an den Motorwagen weitergeleitet. Das System benötigt dementsprechend Sensoren für den Deichselwinkel oder die Deichseldrehrate, für die Hängerdrehrate und für die Hängerquerbeschleunigung.

Aus diesen Signalen werden - ähnlich wie im Motorwagenautomatische und zumindest achsindividuelle Bremseingriffe eingeleitet, sobald eine Instabilität und/oder Kippgefahr festgestellt wird.

Die ESP-Unterfunktion wird in der folgenden Tabelle veranschaut:

| Situation | ESP-Aktion | Anmerkung |
|---|---|---|
| Untersteuern Lkw | kurveninneres Hinterrad Lkw einbremsen | wie bei bisheriger ESP-Funktion: kein Einfluß auf die Hängerbewegung |
| Übersteuern Lkw | kurvenäußeres Vorderrad Lkw und Hinterachse Hänger einbremsen (Strecken des Anhängers) | Einknickgefahr des Anhängers, provoziert durch ESP-Eingriff, wird deutlich reduziert |
| Einknicken Deichselanhänger | Hinterachse Hänger einbremsen (Strecken des Anhängers) | Einknickgefahr des Anhängers wird deutlich verringert |
| Kippgefahr (ROP-Step I) | Bremsen des gesamten Zuges, dabei den Anhänger hinten stärker bremsen | Einknickgefahr des Anhängers, provoziert durch ESP-Eingriff, wird reduziert |
| Radabheben (ROP Step II) | Bremsen des gesamten Zuges, dabei den Anhänger hinten stärker bremsen | Einknickgefahr des Anhängers, provoziert durch ESP-Eingriff, wird reduziert |

Vorteilhafterweise sind kaum Änderungen an der aktuellen ESP-Struktur/HW nötig. Die ROP-Funktion kann durch zusätzliche Informationen verbessert werden. Die Einknickgefahr des Deichselanhängers wird erkannt und verringert. Bei der Realisierung der erfindungsgemäßen Funktion im Anhänger, also bei einem Anhänger-ESP, kann zumindest die Kippgefahr und die Einknickgefahr des Anhängers auch in Verbindung mit einem konventionell (ohne ESP) ausgestatteten Motorwagen verringert werden.

Es sind nicht nur zusätzliche Sensoren im Anhänger nötig. Es muß auch ein Anhänger-ESP muß entwickelt werden oder ein herkömmliches Motorwagen-ESP muß geändert werden.

Gemäß dem erfindungsgemäßen Konzept sind zumindest achsindividuelle Bremseingriffe am Anhänger mit zusätzlicher Sensorik vorgesehen. Gemessen wird die Zugfahrzeugdrehrate, der Deichselwinkel oder die Deichseldrehrate, die Hängerdrehrate und/oder die Hängerquerbeschleunigung. Hierbei wird ein komplettes ESP im Deichselanhänger realisiert, wobei auch Stabilisierungseingriffe für das Zugfahrzeug vorgesehen sind. Das System benötigt einen Sensor für die Zugfahrzeugdrehrate, der im ABS-Stecker integriert sein könnte. Außerdem müssen der Deichselwinkel oder die Deichseldrehrate, die Hängerdrehrate und die Hängerquerbeschleunigung gemessen werden.

Aus diesen Signalen werden - ähnlich wie im Motorwagen - automatische und zumindest achsindividuelle Bremseingriffe eingeleitet, sobald eine Instabilität und/oder Kippgefahr festgestellt wird. Mit Hilfe der Zugfahrzeugdrehrate ist es dar überhinaus möglich, ein Übersteuern des Zugfahrzeugs vom Hänger aus festzustellen und diesem durch Bremsen der hinteren Anhängerachse entgegenzuwirken.

| Situation | ESP-Aktion | Anmerkung |
|---|---|---|
| Untersteuern Lkw | keine Aktion | wird nicht erkannt |
| Übersteuern Lkw | Hinterachse Hänger einbremsen (Strecken des Anhängers) | Einknickgefahr des Anhängers und Übersteuern des Motorwagens wird reduziert |
| Einknicken Deichselanhänger | Hinterachse Hänger einbremsen (Strecken des Anhängers) | Einknickgefahr des Anhängers wird deutlich verringert |
| Kippgefahr (ROP-Step I) | Bremsen des Anhängers, dabei Hinterachse stärker bremsen | Performance vergleichbar mit TROP |
| Radabheben (ROP Step II) | Bremsen des Anhängers, dabei Hinterachse stärker bremsen | Performance vergleichbar mit TROP |

Vorteilhafterweise wird bei der Erfinung eine Einknickgefahr des Deichselanhängers erkannt und verringert. Eine Stabilisierung auch zusammen mit einem konventionell ohne ESP ausgestatteten Motorwagen möglich. Die Anwendung ist auch für Sattelzüge denkbar

Die Erfindung wird anhand der Figuren 1 bis 4 näher erläutert. Es zeigen:
- Figur 1: einen Prinzipaufbau eines Fahrzeugverbundes, bestehend aus einem Zugfahrzeug und einem Anhänger,
- Figur 2: einen weiteren Prinzipaufbau eines Fahrzeugverbundes, bestehend aus einem Zugfahrzeug und einem Anhänger,
- Figur 3: einen weiteren Prinzipaufbau eines Fahrzeugverbundes, bestehend aus einem Zugfahrzeug und einem Anhänger und
- Figur 4: einen weiteren Prinzipaufbau eines Fahrzeugverbundes, bestehend aus einem Zugfahrzeug und einem Anhänger.

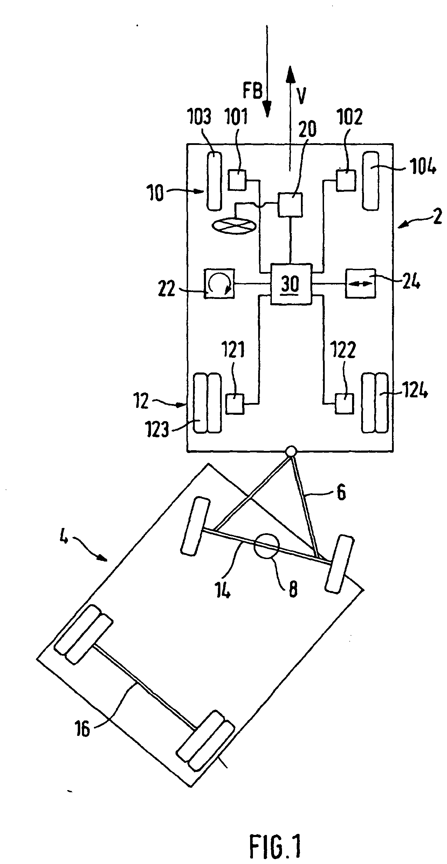

Die grundsätzlichen Funktionen der verschiedenen Ausführungsformen des Systems zur Verhinderung von Fahrzeuginstabilitäten werden anhand der Figuren 1 bis 4 dargestellt, wobei gleiche Teile und Funktionsgruppen jeweils mit gleichen Bezugszeichen versehen sind und auf die Mehrfachbeschreibung von gleichen Teilen verzichtet wird.

In Figur 1 ist in schematischer Prinzipdarstellung ein erstes System beschrieben, bei dem eine dynamische Bremskraftverteilung von einer Vorderachse 14 eines Anhängers 4 zu dessen Hinterachse 16 ermöglicht ist. Erkennbar ist ein Zugfahrzeug 2, typischerweise ein zwei- oder dreiachsiger LKW sowie ein über eine Deichsel 6 am Zugfahrzeug 2 angehängter Anhänger 4, der ebenfalls zwei- oder dreiachsig ausgeführt sein kann. Der Pfeil V verdeutlicht die Fahrtrichtung nach vorn, der Pfeil FB verdeutlicht eine Bremskraft entgegen der Fahrtrichtung des Fahrzeugverbundes.

Der Zugwagen 2 verfügt über ein Stabilitätssystem, bestehend aus Raddrehzahlsensoren 101, 102, 121, 122 an den wenigstens zwei Achsen 10, 12 bzw. an allen Rädern 103, 104, 123, 124 des Zugfahrzeuges 2 sowie ggf. auch des Anhängers 4, einer zentralen Rechen- und Steuereinheit 30, die den Bremsdruck an allen Rädern 103, 104, 123, 124 individuell regeln kann. Weiterhin ist das Zugfahrzeug 2 mit einem Lenkwinkelsensor 20 zur Erfassung des vom Fahrer gewünschten Einschlagwinkels der Vorderräder 103, 104 sowie mit Beschleunigungssensoren 22, 24 zur Erkennung von Gierbeschleunigungen und Querbeschleunigungen versehen, die ihre Ausgangssignale jeweils an die zentrale Recheneinheit 30 liefern.

Bei einem mehrgliedrigen Fahrzeugverbund mit Zugfahrzeug 2 und Deichselanhänger 4 würde die bekannte Strategie zur Vermeidung der Kippgefahr bei überhöhter Geschwindigkeit, nämlich die gleichmäßig verstärkte Abbremsung aller Räder des Deichselanhängers 4 nicht - wie dies bspw. bei einem Sattelzug der Fall ist - zur Streckung des gesamten Zuges führen und dessen Einknickgefahr verringern, sondern die Gefahr mit sich bringen, dass der Anhänger 4 an der Deichsel 6 im Deichselgelenk 8 einknickt, sobald die Räder der Deichselachse 14 zu stark abgebremst werden. Aus diesem Grund ist bei dem erfindungsgemäßen System zur Stabilisierung des Fahrzeugsverbundes in der ersten Ausführungsform vorgesehen, bei bestimmten Fahrsituationen die Bremskraft mehr zur hinteren Anhängerachse 16 hin zu verschieben. Auf diese Weise ist der bei Kurvenfahrt kritische Seitenkraftverlust aufgrund der zusätzlich zu übertragenden Bremskräfte an der Anhängervorderachse 14 reduziert. Gleichzeitig wird der Anhänger 4 und damit der gesamte Zug aufgrund der stärker mit Bremskraft beaufschlagten Anhängerhinterachse 16 gestreckt, wodurch die Gefahr des Einknickens des Anhängers 4 im Deichselgelenk 8 stark reduziert ist.

Mit dem System lassen sich den folgenden Fahrsituationen jeweils die folgenden Eingriffsstrategien zuordnen. Beim Untersteuern des Zugfahrzeuges 2, d.h. beim Schieben desselben über seine Vorderachse 10, wird das kurveninnere Hinterrad des Zugfahrzeuges 2 abgebremst. Wenn bspw. eine Linkskurve gefahren wird, wie dies in Figur 1 angedeutet ist, wird das kurveninnere linke Hinterrad 123 abgebremst. Dadurch wird ein zusätzliches Giermoment in den Fahrzeugaufbau eingeleitet und der Wagen in die Drehbewegung entsprechend dem Fahrerwunsch gezwungen, so dass er dem gewünschten Kurvenverlauf weitgehend folgt. Diese Regeleingriffstrategie unterscheidet sich damit nicht von der bekannter Systeme im PKW- oder LKW-Bereich.

Beim Übersteuern des Zugfahrzeuges 2 drängt dessen Hinterachse 12 zum Kurvenaußenrand, d.h. der Bug des Fahrzeugs dreht sich stärker zum Kurveninneren als dies dem eigentlichen Kurvenradius entspricht. Mit einem gezielten Bremseingriff am kurvenäußeren Vorderrad des Zugfahrzeuges 2 kann das Giermoment um die Hochachse reduziert werden, so dass das Fahrzeug weitgehend dem Kurvenverlauf folgt. Auch dieser Eingriff entspricht dem bekannter Systeme. Zusätzlich wird jedoch bei übersteuernden Zugfahrzeug 2 die Hinterachse 16 des Deichselanhängers 4 mit Bremskraft beaufschlagt, wodurch eine Strekkung des Anhängers 4 und damit des gesamten Zuges erreicht werden kann, und wodurch die Gefahr des Einknickens des Anhängers 4 im Deichselgelenk 8 durch die zusätzlichen Bremseingriffe deutlich reduziert werden kann.

Ein beginnendes oder bereits erfolgtes Einknicken des Deichselanhängers 4 kann von dem beschriebenen System nicht erkannt werden, weshalb auch kein Regeleingriff vom System vorgesehen ist.

Beim LKW sind nicht nur die Gierbewegungen mit ihren unerwünschten Momenten um die Fahrzeughochachse, die ein Über- oder Untersteuern des Fahrzeugs bewirken, problematisch, sondern ebenso die Kippgefahr des gesamten Zuges aufgrund des relativ hohen Fahrzeugschwerpunktes. Die beiden typischerweise auftretenden Instabilitätssituationen sind die Kippgefahr und das Abheben eines oder mehrerer kurveninnerer Fahrzeugräder. Bei den bekannten Systemen zur Verhinderung des Umstürzens werden diese Situationen als ROP Step I (Roll-Over Prevention Schritt I; entspricht der Kippgefahr) und als ROP Step II (Roll-Over Prevention Schritt II; entspricht dem Radabheben) bezeichnet.

Beim System in der beschriebenen Ausführungsform entsprechend der Figur 1 wird bei beiden Situationen, d.h. sowohl bei der Kippgefahr wie auch beim Abheben eines oder mehrerer kurveninnerer Räder der gesamte Zug gebremst, wobei zusätzlich die hintere Achse 16 des Anhängers 4 stärker abgebremst wird. Auf diese Weise wird jeweils die Einknickgefahr des Anhängers 4 im Deichselgelenk 8, welche ansonsten durch den Regeleingriff verstärkt werden könnte, deutlich reduziert.

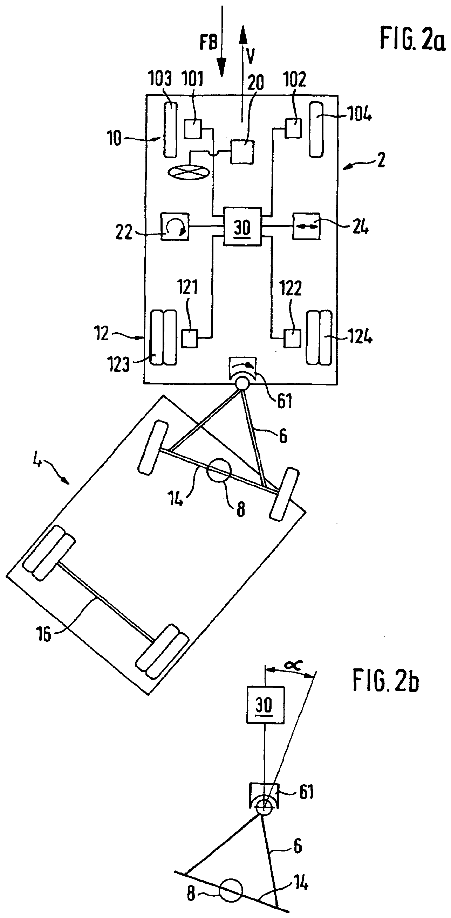

Die Figuren 2a und 2b zeigen in schematischer Prinzipdarstellung ein erweitertes System zu Verhinderung von Fahrzeuginstabilitäten, bei dem ein zusätzlicher Sensor 61 am Anlenkpunkt der Anhängerdeichsel 6 vorgesehen ist. Dieser Sensor 61 ist am Zugfahrzeug 2 angebracht und liefert an die zentrale Rechen- und Steuereinheit 30 Informationen über den Deichselwinkel α relativ zum Zugwagen 2. Auf diese Weise kann gegenüber dem zuvor beschriebenen System zusätzlich die Einknickgefahr der Deichsel 6 sensiert und angepasste Gegenmaßnahmen eingeleitet werden.

Die Fahrsituationen und die daran angepassten Regeleingriffe der Fahrzeug- und Anhängerbremsen beim Unter- und Übersteuern des Zugfahrzeuges sowie bei der Kippgefahr (ROP Step I) und beim Radabheben (ROP Step II) unterscheiden sich nicht von dem zuvor beschriebenen System entsprechend Figur 1, so dass sich hier eine nochmalige Erläuterung der Regelstrategien erübrigt.

Mit dem zusätzlichen Deichselsensor 61 kann nunmehr auch das Einknicken des Deichselanhängers 4 im Deichselgelenk 8 erkannt werden und beim Auftreten dieser Situation die Hinterachse 16 des Anhängers 4 stärker abgebremst werden, wodurch die Einknickgefahr des Anhängers 4 signifikant reduziert werden kann.

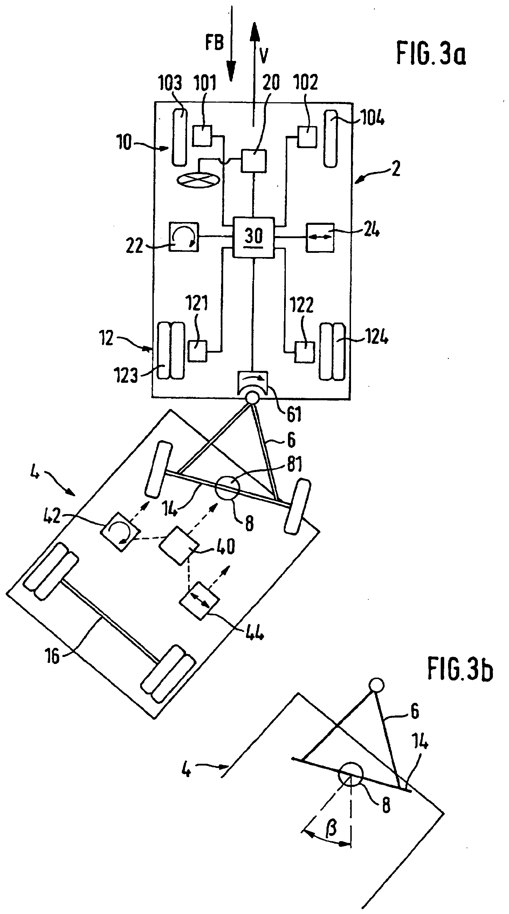

Figuren 3a und 3b zeigen wiederum in schematischer Prinzipdarstellung ein erfindungsgemäßes System zur Verhinderung von Fahrzeuginstabilitäten, bei dem nicht nur ein zusätzlicher Sensor 61 am Anlenkpunkt der Anhängerdeichsel 6 am Zugwagen 2 und/oder ein Sensor 81 im Deichselgelenk 8 des Anhängers 4 zur Erfassung der Deichseldrehrate β vorgesehen ist, sondern darüber hinaus ein Sensor 42 zur Erfassung der Gierbewegungen des Anhängers, der sog. Hängerdrehrate, sowie wenigstens ein Sensor 44 zur Erfassung der Hängerquerbeschleunigungen. Diese Sensoren 42, 44 liefern ihre Ausgangssignale entweder an die im Zugfahrzeug 2 bereits vorhandene zentrale Rechen- und Steuereinheit 30 oder an eine separate Rechen- und Steuereinheit 40 im Anhänger 4, die über eine geeignete Schnittstellenverbindung mit der zentralen Rechen- und Steuereinheit 30 im Zugfahrzeug 2 gekoppelt ist. Auf diese Weise kann gegenüber dem zuvor beschriebenen System nicht nur die Einknickgefahr der Deichsel 6 sensiert und angepasste Gegenmaßnahmen eingeleitet werden, sondern über die sensible Erfassung schon in ihrer Entstehung zu erkennen und auszuschließen.

Die Fahrsituationen und die daran angepassten Regeleingriffe der Fahrzeug- und Anhängerbremsen beim Unter- und Übersteuern des Zugfahrzeuges 2, beim Einknicken des Deichselanhängers sowie bei der Kippgefahr (ROP Step I) und beim Radabheben (ROP Step II) unterscheiden sich nicht von dem zuvor beschriebenen System in der zweiten Ausführungsform entsprechend Figur 2, so dass sich hier eine nochmalige Erläuterung der Regelstrategien erübrigt. Gegenüber dem System in der zweiten Ausführungsform ist mit dem System entsprechend der beschriebenen dritten Ausführungsform eine sensiblere und exaktere Erfassung der Anhängerbewegungen möglich und demzufolge auch eine exaktere Bremsstrategie zur weitgehenden Ausschließung und Verhinderung von kritischen Fahrsituationen.

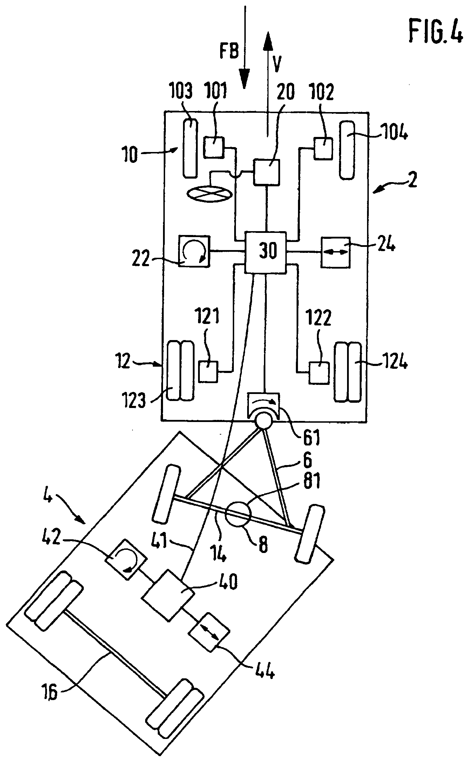

Figur 4 zeigt in einem Ausschnitt eine Variante der Figur 3, bei der jedoch zusätzlich zu den Bremseingriffen im Anhänger 4 Bremseingriffe im Zugfahrzeug 2 vorgesehen sind. Mittels der Erfassung der Deichseldrehrate β kann darüber hinaus zuverlässig ein Übersteuern des Zugfahrzeuges 2 erkannt werden und dem mittels einer verstärkten Abbremsung der hinteren Anhängerachse 16 entgegengewirkt werden. Insgesamt ist die Effektivität der Kippverhinderung sowie der Verhinderung des Abhebens eines kurveninneren Rades mit der eines sog. ESP-Systems eines Sattelzuges vergleichbar.

### Bezugszeichenliste

- 2: Zugfahrzeug
- 4: Deichselanhänger
- 6: Deichsel
- 8: Deichselgelenk
- 10: Vorderachse Zugfahrzeug
- 12: Hinterachse Zugfahrzeug
- 14: Vorderachse Anhänger
- 16: Hinterachse Anhänger
- 18:
- 20: Lenkwinkelsensor
- 22: Gierbeschleunigungssensor
- 24: Querbeschleunigungssensor
- 26:
- 28:
- 30: zentrale Rechen- und Steuereinheit
- 40: Rechen- und Steuereinheit (Anhänger)
- 41: Schnittstelle
- 42: Gierbeschleunigungssensor (Anhänger)
- 44: Querbeschleunigungssensor (Anhänger)
- 61: Deichselwinkelsensor
- 81: Deichseldrehratensensor

- 101,102: Raddrehzahlsensoren Vorderachse
- 121,122: Raddrehzahlsensoren Hinterachse

- 103,104: Räder
- 123,124: Räder

- α: Deichselwinkel
- β: Deichseldrehrate

## Patentansprüche

1. Steuermodul zur Verhinderung von Fahrzeuginstabilitäten für einen Fahrzeugverbund bestehend aus einem Zugfahrzeug (2) und wenigstens einem Deichselanhänger (4), wobei das Steuermodul die folgenden Merkmale aufweist:
- eine Sensorik (101, 102, 121, 122, 20, 22, 24) für ein Zugfahrzeug (2) vorgesehen ist, und zwar zur Erfassung von Differenzen zwischen einem Kurswunsch des Fahrers und einer tatsächlichen Fahrtbewegung zumindest des Zugfahrzeuges (2),
- in Abhängigkeit von einer von der Sensorik (101, 102, 121, 122, 20, 22, 24) erfassten Differenz zwischen dem Kurswunsch des Fahrers und der tatsächlichen Fahrtbewegung sind zumindest Räder des Zugfahrzeugs (2) individuell mit Bremskräften beaufschlagbar, und zwar zur Erzeugung eines Giermoments entgegengesetzt zu einem Giermoment aufgrund der Differenz zwischen Fahrerkurswunsch und tatsächlicher Fahrzeugbewegung, und
- bei erkannten Differenzen sind zusätzlich Räder der Anhängerhinterachse (16) mit Bremskräften beaufschlagbar,
wobei am Zugfahrzeug (2) ein zusätzlicher Deichselwinkelsensor (61) und am Anhänger (4) ein zusätzlicher Deichseldrehratensensor (81) zur Erkennung einer Einknickung der Anhängerdeichsel (6) im Deichselgelenk (8) vorgesehen ist, und wobei bei einer erkannten Einknickung eine Abbremsung des gesamten Fahrzeugverbundes (2, 4) ermöglicht ist, wobei die Räder an der Hinterachse (16) des Anhängers (4) stärker mit Bremskraft beaufschlagbar sind als Räder an einer Vorderachse (14) des Anhängers (4).

2. Steuermodul nach Anspruch 1, wobei die Sensorik im Zugfahrzeug (2) folgende Merkmale aufweist:
- einen Lenkwinkelsensor (20) zur Erfassung eines aktuellen Kurswunsches des Fahrers,
- wenigstens einen Gierbeschleunigungssensor (22) zur permanenten Erfassung eines Gierbeschleunigung des Zugfahrzeuges (2),
- wenigstens einen Querbeschleunigungssensor (24) zur permanenten Erfassung einer Querbeschleunigung des Zugfahrzeuges (2) und
- je einen Raddrehzahlsensor (101, 102, 121, 122) an jedem Rad (103, 104) der Vorderachse (10) sowie an jedem Rad (123, 124) wenigstens einer Hinterachse (12) des Zugfahrzeuges.

3. Steuermodul nach einem der Ansprüche 1 bis 2, wobei in einer der Sensorik (101, 102, 121, 122, 20, 22, 24) nachgeschalteten zentralen Rechen- und Steuereinheit (30) eine Differenz zwischen dem Kurswunsch des Fahrers und der tatsächlichen Fahrtbewegung zumindest des Zugfahrzeuges (2) berechnet werden und in Abhängigkeit von der berechneten Differenz eine radindividuelle Abbremsung erfolgen kann.

4. Steuermodul nach einem der vorstehenden Ansprüche, wobei im Anhänger (4) eine zusätzliche Sensorik (42, 44, 81) zur Erfassung des aktuellen Kurses des Anhängers (4) und zur Ansteuerung der Bremsen im Anhänger (4) in Abhängigkeit von den Ausgangssignalen der Sensorik (42, 44, 81) vorgesehen ist.

5. Steuermodul nach Anspruch 4, wobei die zusätzliche Sensorik im Anhänger (4) wenigstens einen Deichseldrehratensensor (81), einen Gierbeschleunigungssensor (42) sowie wenigstens einen Querbeschleunigungssensor (44) umfasst.

6. Steuermodul nach einem der Ansprüche 4 oder 5, wobei die zusätzliche Sensorik (42, 44, 81) im Anhänger (4) mit einer zusätzlichen Rechen- und Steuereinheit (40) im Anhänger (4) gekoppelt ist, die eine Schnittstelle (41) zur Rechen- und Steuereinheit (30) im Zugfahrzeug (2) aufweist.

7. Steuermodul nach Anspruch 6, wobei aus den Ausgangssignalen der Sensorik (101, 102, 121, 122, 20, 22, 24, 61) im Zugfahrzeug (2) und der Sensorik (42, 44, 81) im Anhänger (4) in den Rechen- und Steuereinheiten (30, 40) eine zumindest achsindividuelle Abbremsung des Fahrzeugverbundes (2, 4) bei erkannten Instabilitäten erzeugbar sind.

8. Fahrzeugverbund, versehen mit einem Steuermodul nach einem der Ansprüche 1 bis 7.

## Claims

1. Control module for preventing vehicle instabilities for a compound vehicle consisting of a tractor vehicle (2) and at least one draw-bar trailer (4), wherein the control module comprises the following features:
- a sensor system (101, 102, 121, 122, 20, 22, 24) is provided for a tractor vehicle (2) for detecting differences between a driver's desired direction of travel and an actual driving movement of at least said tractor vehicle (2),
- in dependence on a difference between the driver's desired direction of travel and the actual driving movement, which is detected by said sensor system (101, 102, 121, 122, 20, 22, 24), braking forces may be applied individually to at least wheels of said tractor vehicle (2) for generating a yawing moment in opposition to a yawing moment induced by the difference between the driver's desired direction of travel and the actual movement of the vehicle, and
- when differences are detected, brake forces may be applied additionally to wheels of the rear axle (16) of said trailer,
wherein an additional draw-bar angle sensor (61) is provided on said tractor vehicle (2) and an additional draw-bar rotational rate sensor (81) is provided on said trailer (4) for detecting a sharp bending of the trailer draw-bar (6) in the draw-bar joint (8), and wherein, when a sharp bending is detected, braking of the complete compound vehicle (2, 4) is enabled, wherein the wheels on said rear axle (16) of said trailer (4) are adapted for a stronger application of a braking force than the wheels on a front axle (14) of said trailer (4).

2. Control module according to claim 1, wherein said sensor system in said tractor vehicle (2) comprises the following features:
- a steering angle sensor (20) for detecting a current driver's desired direction of travel,
- at least one yaw acceleration sensor (22) for permanent detection of a yaw acceleration of said tractor vehicle (2),
- at least one transverse acceleration sensor (24) for permanent detection of a transverse acceleration of said tractor vehicle (2), and
- one respective wheel speed sensor (101, 102, 121, 122) on each wheel (103, 104) of the front axle (10) as well as on each wheel (123, 124) of at least one rear axle (12) of said tractor vehicle.

3. Control module according to one of the claims 1 or 2, wherein a difference between the driver's desired direction of travel and the actual driving movement at least of said tractor vehicle (2) is calculated in a central computing and control unit (30) downstream of said sensor system (101, 102, 121, 122, 20, 22, 24) and wherein individualised braking per wheel may be performed in response to the calculated difference.

4. Control module according to any of the preceding claims, wherein an additional sensor system (42, 44, 81) is provided in said trailer (4) for detecting the current direction of travel of said trailer (4) and for controlling the brakes in said trailer (4) in response to the output signals from said sensor system (42, 44, 81).

5. Control module according to claim 4, wherein said additional sensor system in said trailer (4) comprises at least one draw-bar rotational rate sensor (81), one yaw acceleration sensor (42) as well as at least one transverse acceleration sensor (44).

6. Control module according to one of the claims 4 or 5, wherein said additional sensor system (42, 44, 81) in said trailer (4) is coupled with an additional computing and control unit (40) in said trailer (4), which comprises an interface (41) with said computing and control unit (30) in said tractor vehicle (2).

7. Control module according to claim 6, wherein individualised braking at least per axle of the compound vehicle (2, 4) can be generated from the output signals from said sensor system (101, 102, 121, 122, 20, 22, 24, 61) in said tractor vehicle (2) and from said sensor system (42, 44, 81) in said trailer (4) in said computing and control units (30, 40) when instabilities have been detected.

8. Compound vehicle provided with a control module according to one of the Claims 1 to 7.

## Revendications

1. Module de commande destiné à éviter des instabilités d'un véhicule automobile pour un ensemble de véhicules comprenant un véhicule tracteur (2) et au moins une remorque à timon (4), le module de commande présentant les éléments suivants :
- un système de capteurs (101, 102, 121, 122, 20, 22, 24) pour un véhicule tracteur (2) et notamment servant à détecter des différences entre un souhait de trajectoire du conducteur et un mouvement réel au moins du véhicule tracteur (2),
- en fonction d'une première différence détectée par le système de capteurs (101, 102, 121, 122, 20, 22, 24) entre un souhait de trajectoire du conducteur et le mouvement réel du véhicule, au moins des roues du véhicule tracteur (2) peuvent être soumises individuellement à des forces de freinage et notamment pour produire un moment de lacet inverse à un moment de lacet en raison de la différence entre le souhait de trajectoire du conducteur et le mouvement réel du véhicule et
- lorsque les différences sont détectées, les roues de l'essieu arrière (16) de remorque sont en outre soumises aux forces de freinage,
le véhicule tracteur (2) comprenant un capteur supplémentaire (61) d'angle de timon et la remorque (4) comprenant un capteur de vitesse de rotation (81) de timon destiné à détecter une déformation du timon de remorque (6) dans la rotule de timon, et lorsqu'une déformation est détectée, un freinage de tout l'ensemble de véhicule (2, 4) se produit, les roues de l'essieu arrière (16) de la remorque (4) étant soumises à une force de freinage supérieure que les roues d'un essieu avant (14) de la remorque (4).

2. Module de commande selon la revendication 1, le système de capteurs comprenant dans le véhicule tracteur (2) les éléments suivants :
- un capteur d'angle de direction (20) destiné à détecter un souhait de trajectoire réel du conducteur,
- au moins un capteur d'accélération de lacet (22) destiné à détecter en permanence une accélération de lacet du véhicule tracteur (2),
- au moins un capteur d'accélération latérale (24) destiné à détecter en permanence une accélération latérale du véhicule tracteur (2) et
- un capteur de vitesse de roue (101, 102, 121, 122) sur chaque roue (103, 104) de l'essieu avant (10) ainsi que sur chaque roue (123, 124) au moins d'un essieu arrière (12) du véhicule tracteur.

3. Module de commande selon l'une des revendications 1 à 2, dans une unité de commande et de calcul (30) centrale montée en aval du système de capteurs (101, 102, 121, 122, 20, 22, 24) il est calculé une différence entre la trajectoire souhaitée du conducteur et le mouvement réel au moins du véhicule tracteur (2), et en fonction de la différence calculée chaque roue est soumise individuellement au freinage.

4. Module de commande selon l'une quelconque des revendications précédentes, la remorque (4) comprenant un système de capteurs supplémentaire (42, 44, 81) destiné à détecter la trajectoire réelle de la remorque (4) et destiné à commander les freins de la remorque (4) en fonction des signaux de sortie provenant du système de capteurs (42, 44, 81).

5. Module de commande selon la revendication 4, le système de capteurs supplémentaire dans la remorque (4) comprenant au moins un capteur de vitesse de rotation (81), un capteur d'accélération de lacet (42) ainsi qu'au moins un capteur d'accélération latérale (44).

6. Module de commande selon l'une quelconque des revendications 4 ou 5, le système de capteurs supplémentaire (42, 44, 81) dans la remorque (4) est accouplé à une unité de commande et de calcul supplémentaire (40) dans la remorque (4) qui présente une interface (41) avec l'unité de commande et de calcul (30) dans le véhicule tracteur (2).

7. Module de commande selon la revendication 6, les signaux de sortie provenant du système de capteurs (101, 102, 121, 122, 20, 22, 24, 61) dans le véhicule tracteur (2) et le système de capteurs (42, 44, 81) dans la remorque dans les unités de commande et de calcul (30, 40) permettent de soumettre au moins individuellement chaque essieu de l'ensemble de véhicules (2, 4) au freinage lorsque des instabilités sont détectées.

8. Ensemble de véhicules équipé d'un module de commande selon l'une quelconque des revendications 1 à 7.
